# EUROPEAN PATENT SPECIFICATION

(11) **EP 1 547 758 B1**
(45) Date of publication and mention of the grant of the patent: **09.04.2008**
(21) Application number: 05101557.6
(22) Date of filing: 07.05.2002
(51) Int. Cl.: B29D 30/56

(54) **A method of centering an annular tread on a tyre casing.**
Verfahren zur Zentrierung einer ringförmigen Lauffläche auf eine Reifenkarkasse.
Procédé pour le centrage d'une bande de roulement annulaire sur une carcasse de pneumatique.

(30) Priority: 17.05.2001 US 291285 P
(43) Date of publication of application: 29.06.2005
(62) Divisional of application: 02100457.7
(73) Proprietor: THE GOODYEAR TIRE & RUBBER COMPANY, Akron, OH 44316-0001 (US)
(72) Inventor: Parrish, Gary Charles, Irving, TX 75060 (US); Parise, Ralph Michael, Stow, OH 44224 (US); Schumacher, Gary Bernard, Navarre, OH 44662 (US); Beller, Randy Ray, North Canton, OH 44720 (US)
(74) Representative: Kutsch, Bernd

(56) References cited:
- EP-A- 0 704 296
- GB-A- 973 693
- US-A- 3 976 532
- US-A- 4 036 677
- US-A- 4 957 574

## Description

### Technical Field of the Invention

This present invention relates to a method for centering an annular tread on a pneumatic tire casing.

### Background of the Invention

In the practice of retreading tires, more specifically when applying an annular tread or ring tread onto a pneumatic tire casing, it is common practice to stretch the tread prior to positioning it over the casing.

In US-A- 4,957,574, a tread centering method and apparatus is disclosed. In that patent a tread expander is shown having a plurality of radially expandable fingers that support the tread at several locations and when expanded stretch the tread a sufficient amount to allow the tread to encircle the casing to which the tread is about to be mounted. This device requires the operator to position himself between the wheel mount assembly and the tread expander when he places the tread onto the expander. This means the operator of the equipment must work at the side of the apparatus and must lean into the equipment while holding an annular tread weighing as much as 50 pounds (23 kg) to place it on the unit. To avoid this, the operator often suspends the tread on one of the tread expander fingers to support the tread weight and then he simply works the tread over the remaining support fingers. This greatly reduces the fatigue and potential injury factor, but it in no way improves the time to make the assembly.

GB-A- 973,693 describes a tire building machine incorporating an apparatus from mounting and centering cylindrical layer of rubberized cord materials on a tire building former. The centering is done using in an automatic way photo-electric cells.

It is an objective of the present invention to provide a tread application apparatus that permits the operator to perform all operations at one end of the machine.

It is a further objective of the invention to provide a machine with a unique tread alignment capability.

It is still a further objective to minimize worker fatigue by enabling a simpler method of applying the tread and casing to the apparatus.

### Summary of the Invention

The invention relates to a method for centering an annular tread on a pneumatic tire casing according to claim 1. Dependent claims relate to preferred embodiments of the invention.

Also described is a method for applying an annular tread to a pneumatic tire casing, which has the steps of mounting the tread on a tread expander assembly wherein the tread passes over a mount wheel prior to the casing being mounted onto the mount wheel. The mount wheel is movable along a line coincident with or parallel to the axis of the tread expander assembly. This method has the casing mounted to the mount wheel while the mount wheel is extended outward of the tread expander assembly, the tread is radially expanded and the mounted casing is retracted with the tread encircling the casing, clamping the tread to the casing and transferring the tread onto the casing.

In one aspect, this method further has the step of mounting the tread on the tread expander, including the steps of pushing the tread along a first edge of the tread to a fixed distance at each location of tread support, thereby aligning the annular tread parallel to the casing prior to expanding the tread over the casing.

The apparatus for practicing the method according to the invention has a control cabinet structure wherein all the mechanisms for supporting the casing and tread are extended from one end allowing the operator to work entirely in front of the apparatus.

### Brief Description of the Drawings

The invention will be described by way of example and with reference to the accompanying drawings in which:
Figure 1 is a plan view of an apparatus to be used to practise the present invention.
Figure 2 is an end view of the apparatus of Figure 1.
Figure 3 is a top view of the apparatus of Figure 1.
Figure 4 is a cross-sectional view of the apparatus taken along lines 4-4 of Figure 3.
Figure 5 is a partial plan view of the end of the apparatus depicting a cross-section of a tread mounted onto the tread expander assembly.
Figure 6 is an end view of the tread mount on the tread expander assembly.
Figure 7 shows a casing mounted onto the mount wheel of the apparatus.
Figure 8 is an end view of the apparatus showing the casing and tread mounted on the apparatus.
Figure 9 shows a partial cross-sectional view of the tread on the tread expander being centered over the casing.
Figure 10 is an end view showing the tread clamping mechanism securing the tread to the casing while the tread expander fingers are extended and lying between the tread and the casing.
Figure 11 shows the tread expander with the fingers retracted from between the tread and the casing.
Figure 12 shows the clamping mechanism reclamping the tread at spaced locations.
Figures 13 and 14 show views of a tread stitcher mechanism sticking the tread to the casing as the tread casing assembly is rotated.
Figures 15, 16, 17 and 18 are a schematic diagram of the tread applicator sequence.
Figure 19 is a perspective view of one of the tread expander fingers.
Figure 20 shows a cross-section of the tread expander fingers with a tread shown centered around the casing.

### Detailed Description of the Preferred Embodiments

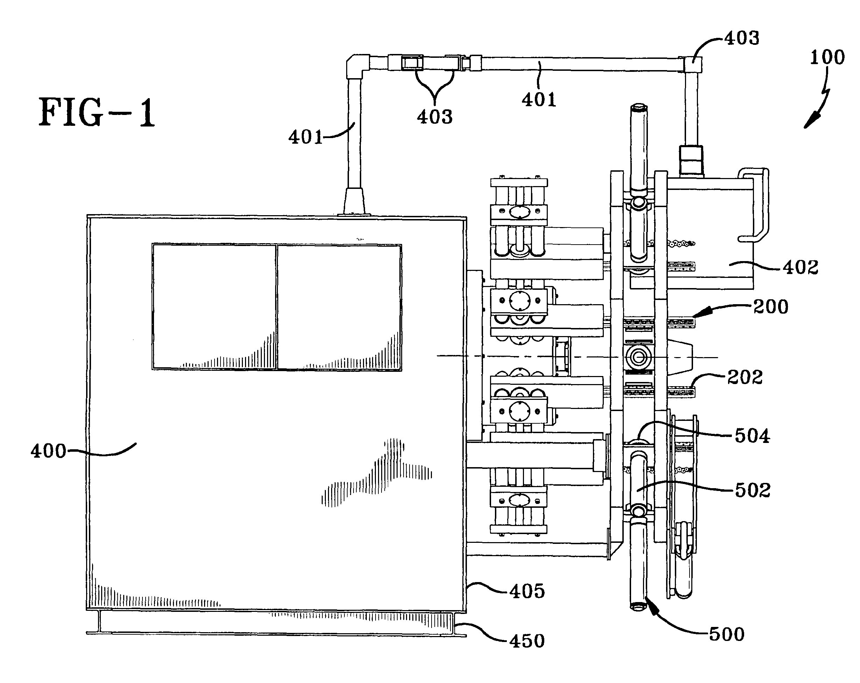

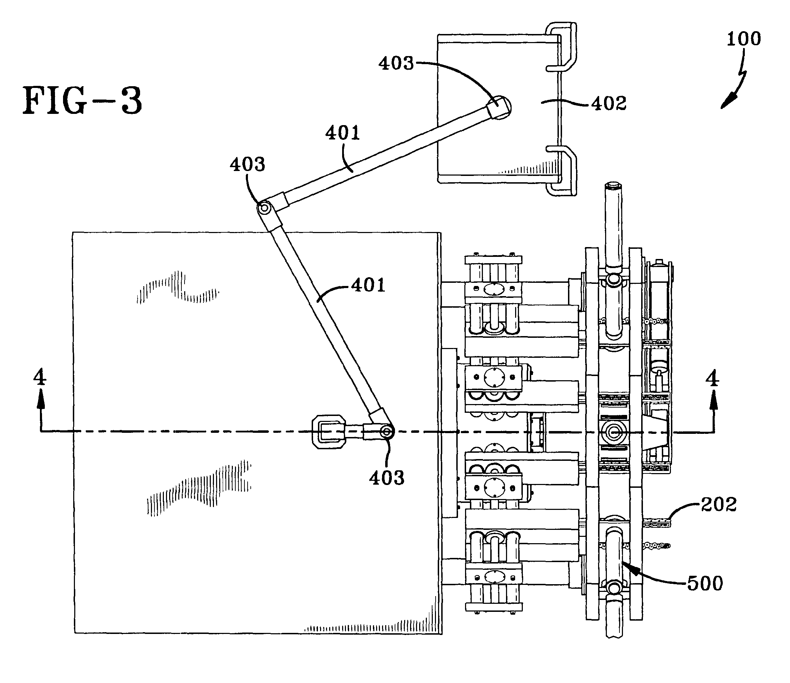

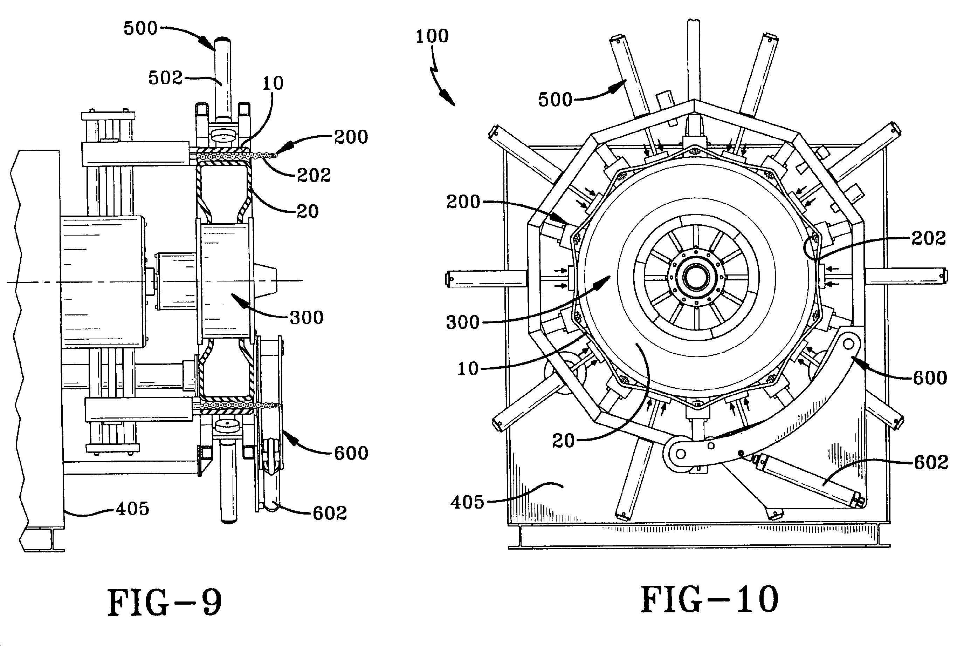

A tread application apparatus 100 with automated tread centering feature is illustrated in Figures 1-14. As shown in Figure 1, a large control cabinet is illustrated, the control cabinet structure 400 includes a base frame 450, which is preferably securely mounted to the floor. Extending from the top of the control cabinet is an electrical conduit 401 having pivotable joints 403. At the end of the conduit is a touch screen control monitor 402. From this control monitor 402, an operator can select all of the necessary features to apply a tread 10 to a prepared tire casing 20. The control monitor 402 and its embedded software assist the operator to not only mount the proper tread 10 onto the proper casing 20, but to do so in a manner that insures that the tread 10 is properly centered at the time it is applied to the casing 20.

Extending from the front end 405 of the cabinet structure 400 is a tread expander assembly 200. The tread expander assembly 200 is designed to accept a circular or annular tread 10. The tread expander assembly 200 has a plurality of fingers 202 at spaced locations designed to contact the tread 10. The entire tread expander assembly 200 is radially movable along a fixed axis to open and close. Each tread expander finger 202 is radially expandable such that it can stretch the tread 10 to a diameter sufficiently large to enable the tread, while mounted on the fingers 202, to be expanded sufficient to enable the tread 10 to encircle the casing 20 upon which the tread 10 is to be applied.

Also extending from the front panel or end 405 is a mount wheel 300, which has an axis coincident with the axis of the tread expander assembly 200. The mount wheel 300 is movable linearly along an axis coincident with the axis of tread expander assembly 200 so that the mount wheel 300 can be retracted or extended relative to the cabinet structure 400.

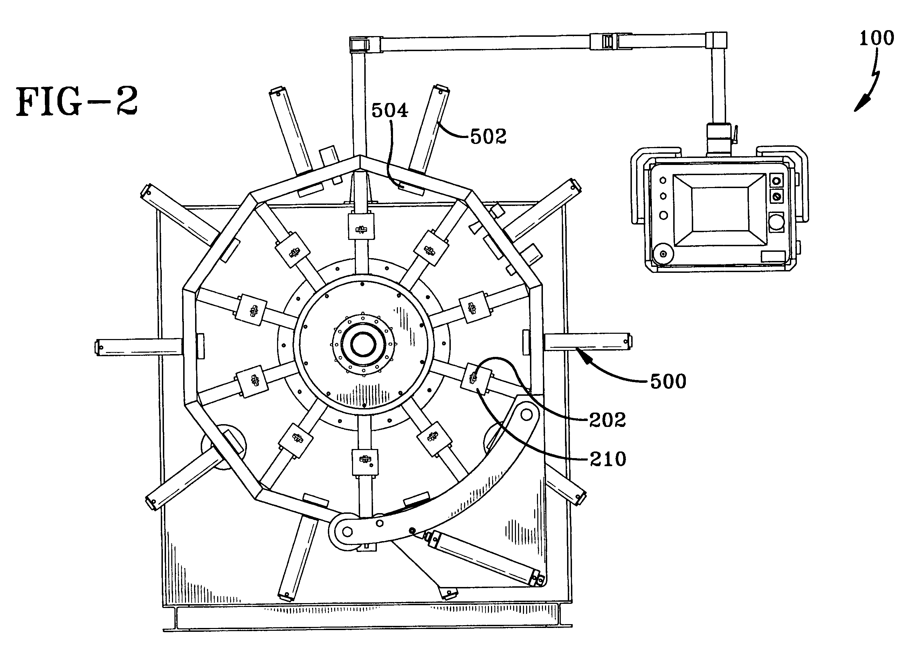

A clamping mechanism 500 as shown in Figure 2 is positioned at a diameter superior to the tread expander fingers 202. At locations spaced approximately equal distance between pairs of the tread expander fingers 202 there is located a clamp 502 having a round pad 504 that comes in contact with the tread 10 and applies pressure locally against the tread 10 pushing the tread 10 onto the casing 20 and securing it there during the assembly 200.

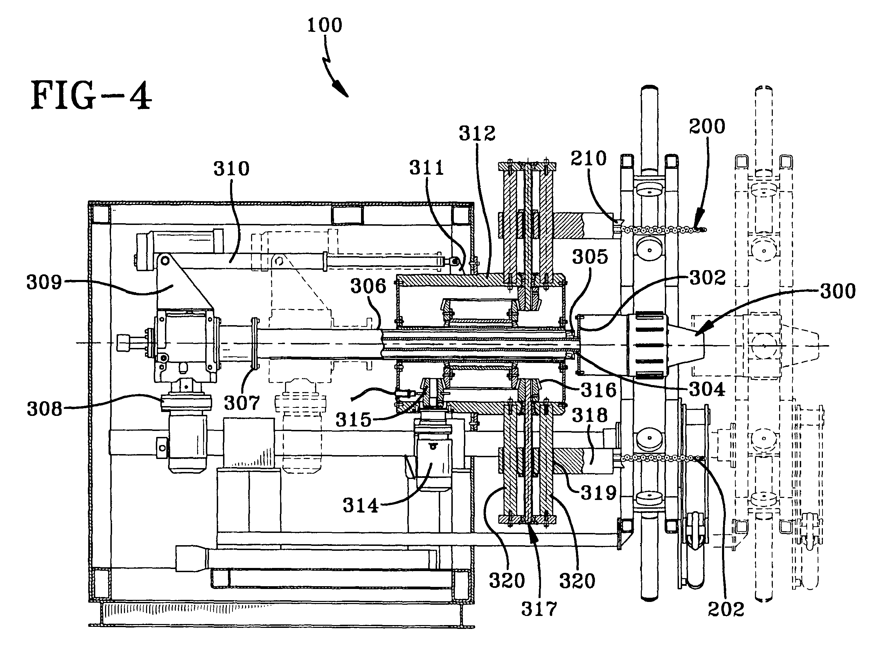

With particular reference to Figure 4, a cross-sectional view of the application apparatus 100 is shown. As shown, the mount wheel 300 is attached to a plate 302 welded to a slidable axle 304, the axle 304 is positioned and centered on a tapered roller bearing 305. This axle 304 mount wheel 300 and clamp 500 can be extended outwardly to a position shown in phantom lines. The axle 304 is centered internal of an outer housing 306, bolted to the outer housing at the flange 307 is a drive motor mechanism and attachment assembly 308. As shown, this entire assembly 308 traverses with the mount axles 304 and 306 as the mechanisms are extended and retracted. As illustrated, a bracket 309 extends from the aft end of the mount wheel axle 304. Connected to the bracket 309 is found a hydraulic cylinder 310. The hydraulic cylinder 310 is connected at the flange 311 to a cylindrical housing 312. The cylindrical housing 312 includes a plurality of gear drive mechanisms, the gear drive mechanisms being operated by a drive motor 314 which rotates the gear 315 to drive a plurality of gears 316, each gear 316 being connected to a shaft 317. Each shaft 317 is threaded and connected to a support 318, which is connected to one of the fingers 202 of the tread expander assembly 200. The shaft 318 supporting the finger includes two bearings 319, which are slidably attached over post 320 in two locations as illustrated for each finger 202 of the tread expander assembly 200.

As can be easily appreciated by one skilled in the art the mechanisms are connected in such a way that movements can be controlled independently or cooperatively linked. This is accomplished by means of systems included in the cabinet structure 400, all of which can be operated at the control monitor 402.

As one skilled in the art will easily appreciate the mechanical mechanisms for driving the tread expander assembly 200 and the case mount assembly 300 and the clamping mechanism 500 can all be accomplished through other alternative means, however, it is important that the mechanisms be sufficiently coupled that they can work in cooperative movement so that alignment can be achieved, most preferably automatically.

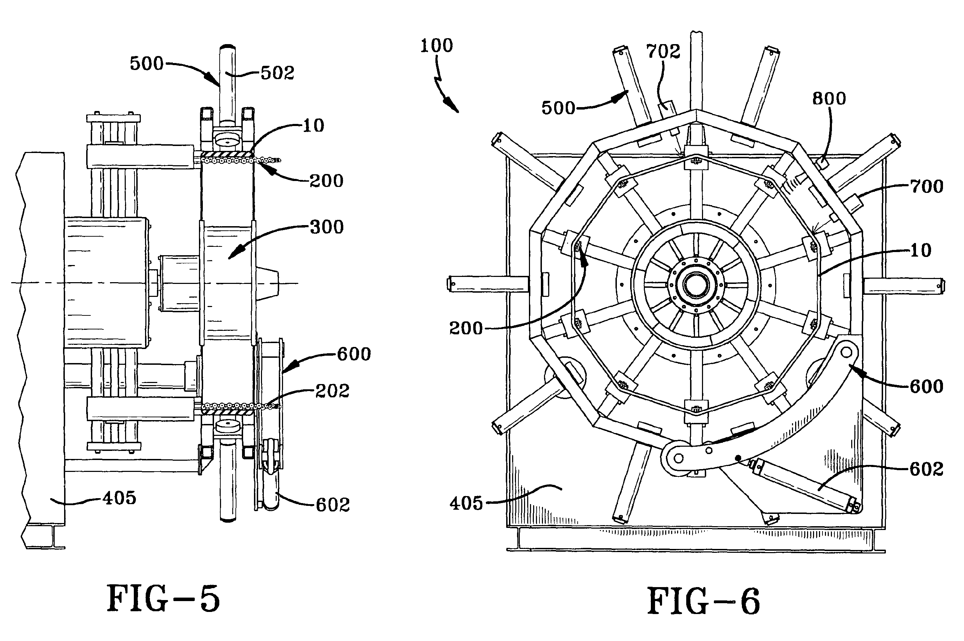

To facilitate an understanding of how a tread 10 is applied to a prepared casing 20, Figures 5 through 14 demonstrate in a rather systematic fashion how a tread 10 and tire casing 20 can be applied to the tread applicator 100. With reference to Figure 5, an annular tread 10 is shown mounted onto the tread expander assembly 200. The tread 10 is positioned over the plurality of fingers 202 and is slid onto the assembly 200 until it contacts a stop mechanism 210. The stop mechanism 210 is linearly movable and as discussed later has a contour such that it insures the stop contacts an upper portion of the tread 10 along a tread shoulder 12. This insures that wing treads can be accommodated without interfering with the automated centering feature, which will be discussed later.

As shown, the mount wheel 300 is in a retracted position approximately centered with the tread expander assembly 200 during this operation. What would be readily appreciated is that the operator can mount the circular tread 10 over the tread expander assembly 200 while simultaneously being able to position the tread 10 from one end of the apparatus. In prior art mechanisms, these locations were separated such that an operator had to position himself between the tread expander assembly 200 and the casing 20 and would have to serpentine a circular tread between the mechanisms in order to accomplish this feat. By designing the piece of equipment as shown in Figure 5, the operator can simply position the tread 10 onto the tread expander assembly 200 while not having to position himself between any other mechanism. This greatly enhances the ergonomics of the applications and facilitates the operator's ability to mount the tread 10 quickly and precisely.

As shown in Figure 6, the next operation is to have the tread expander assembly 200 extend to a position in a slightly expanded mode. This slightly tensions the tread 10 such that it is securely positioned on the tread expander 200. When this is accomplished because the tread expander assembly 200 has spaced locations for the fingers 202, the tread 10 takes on somewhat of a linear configuration between adjacent fingers 202.

As the tread 10 is positioned into contact with the stop mechanism 210, a first tread edge and the second tread edge pass under the sensor 700, the sensor 700 indicates or singles the software and the software predicts the total width TW of the tread 10 and the apparatus internal computer calculates the distance to the centerline from the stop mechanism 210. The stop mechanism 210 is preferably designed to be axially movable such that at each location it automatically positions itself back to a tread contact point at each finger location. To insure contact of the tread at each stop mechanism 210, it is also desirable to have the stop mechanism 210 move slightly back, in other words, the operator pushes the tread 10 onto an over-mount position and then the stop mechanism 210 moves the tread 10 back to a perfectly centered position at a known plane P coincident with the center-plane CP of the tread 10. This is important because this software enables the operator to simply place the tread 10 on the expander assembly 200 and the tread 10 will be automatically aligned and the exact center will be calculated each time for each tread 10 so that each tread 10 regardless of its axial width will be able to be centered precisely at the tread center.

Another feature that is useful is the operator can adjust for slight off center if he prefers to actually mount the tread 10 such that it is not precisely centered, but in a position that actually fits the contour of the casing 20 in a better fashion. In certain cases, this may be wherein the casing 20 was not precisely buffed such that the casing centerline is not in perfect alignment. This can occur occasionally due to manufacturing tolerances, however, this equipment is so precise it allows the operator to align the tread 10 precisely to the contour of the buffed casing 20 regardless of its position relative to the casing centerline. In such a case, the centerline of the casing 20 can be jogged to align with a centering laser beam mechanism 702.

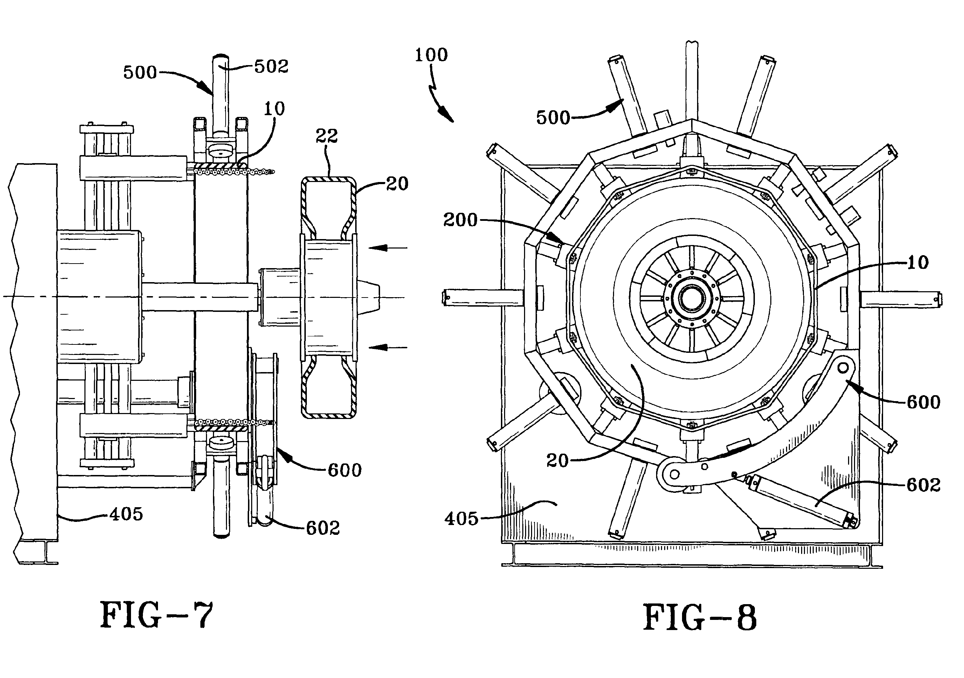

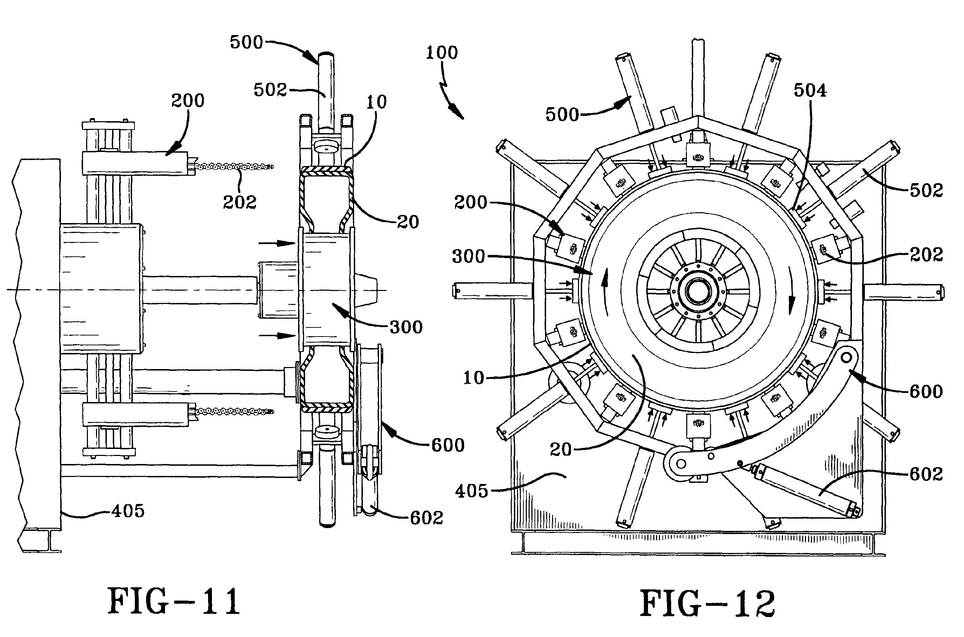

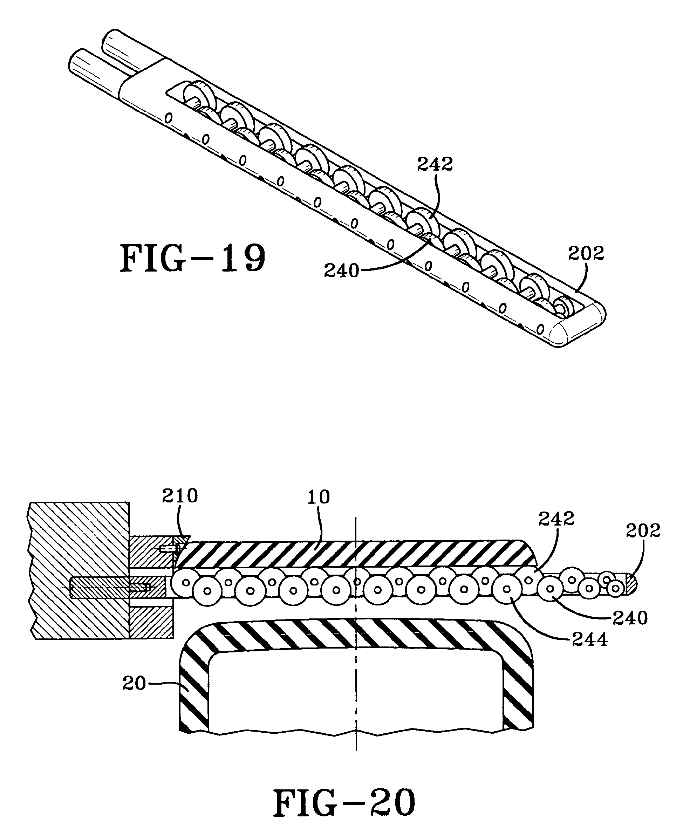

In Figure 7, once the tread 10 is centered the tread expander fingers 202 are stretched further to a position that will permit the tread expander fingers 202 to let the casing move under tread. As shown in Figure 7, the casing wheel mount 300 has been extended such that the tire casing 20 can be mounted easily onto the wheel mount 300. Once mounted the casing 20 can be inflated on the wheel mount 300 prior to applying the tread 10. Shown in Figure 8, the casing can be moved under or actual inside the annular tread 10, encircling the casing 20 as shown. In such a case, the fingers 202 retract close to but do not contact the outer surface of the casing 20, moving over the casing 20 and deliver the tread 10 to the proper location. As shown in Figures 19 and 20, each finger 202 has a plurality of wheels 240. Each wheel 240 is positioned such that there are two rows, an upper row 242 and a lower row 244, the wheels 240 progressively gets smaller as you reach the extreme end of the finger 202. This insures that as the tread 10 is clamped into position on the casing 20, the fingers 202 can easily be extracted as the wheels 240 get smaller as they are being pulled out from between the tread 10 and the casing 20. Prior to pulling the fingers 202 out, the clamps 502 between adjacent fingers 202 are extended until the clamp pads 504 contact the tread 10 against the casing 20 and to secure it in a lock-down position, then the fingers 202 are extracted from the tire assembly as shown in Figure 11. The clamps 502 are shown in a retracted position.

In Figure 12, the clamps 502 impact the tread 10 to the casing 20 at a plurality of locations as the casing 20 is rotated and indexed. This creates a tamping action further securing the tread 10 onto the casing 20.

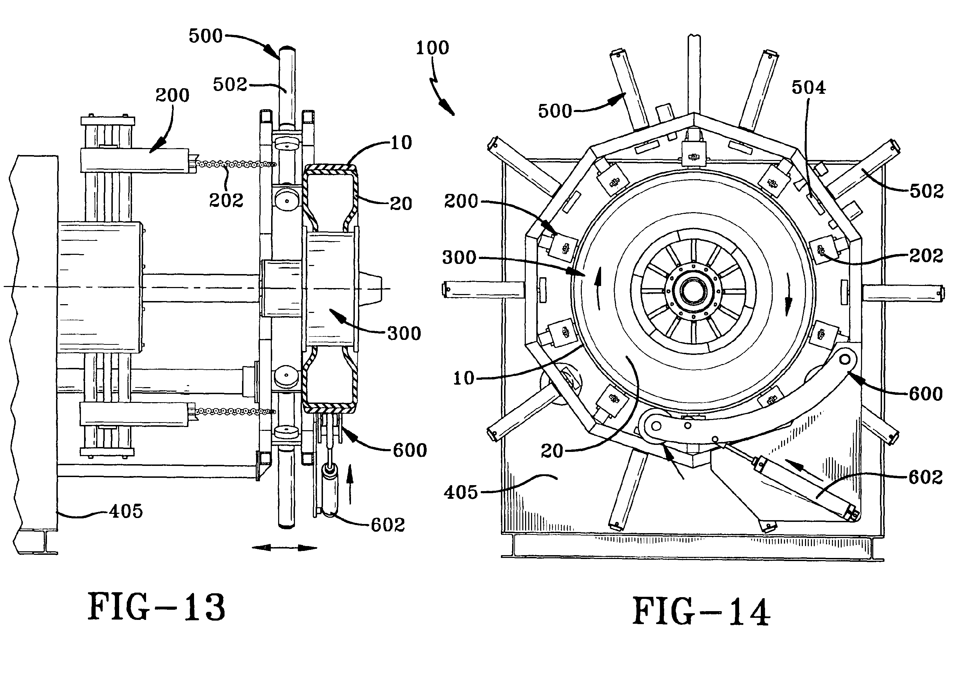

In Figure 13, the clamping mechanism 50 is retracted slightly away from the assembled tread 10 and casing 20, at which point in time a pneumatic cylinder 602 is extended and a stitcher mechanism 600 comes into contact with the tread 10. As the casing 20 and tread 10 are rotated, this stitcher 600 further stitches the tread 10 to the casing 20 using the rollers 604 as illustrated in Figure 14.

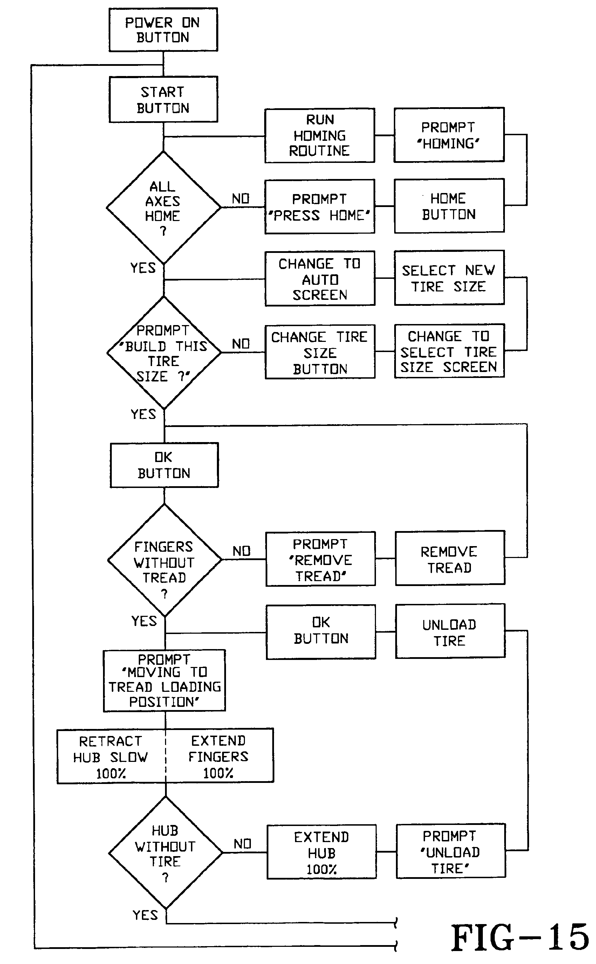

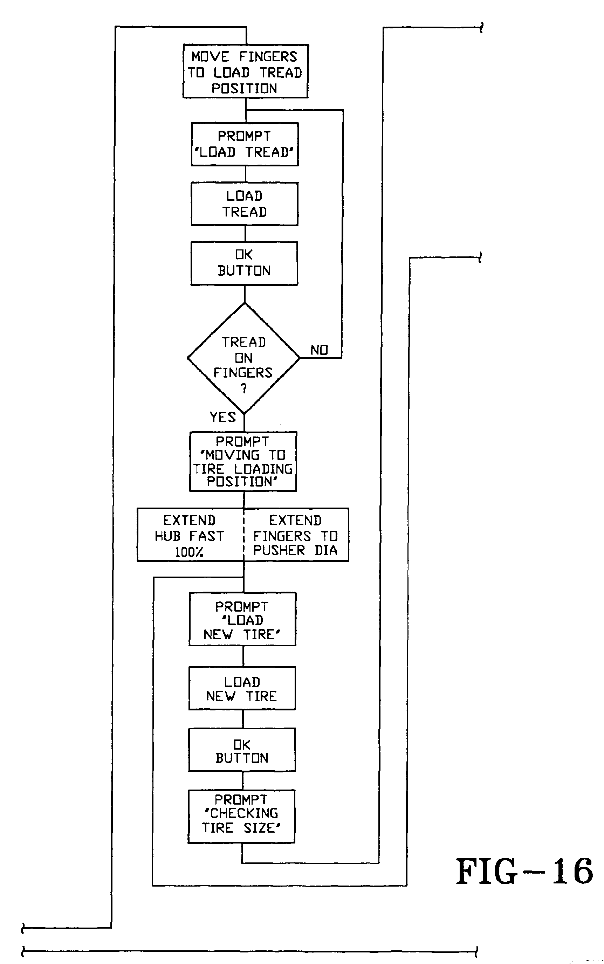

With reference to Figures 15, 16, 17 and 18, a diagrammatic and schematic sequence of the tread application method and process is shown wherein the software indicates certain activities which the mechanism 600 must go through in order to apply a tread 10 to the tire casing 20.

The software used in the present apparatus accommodates a variety of tire sizes. In order to simplify the mounting procedure certain features that were previously discussed in this application have more simplified or generic terms that are easier understand by the operator. For example, the apparatus 100 will be referred to a "machine". The monitor 402 will be referred to as "the main screen". In several applications the software indicates the machine will prompt. In this reference what is actually happening is that the screen of the monitor displays a touch pad that prompts the tire builder to press a button on the screen indicating okay or not okay, or indicating what action he anticipates the machine to take next. The mount wheel 300 will be referred to as "the hub". The "ring" is a term used in the software that references to the clamping mechanism and the term "tire" is used when most often is referring to the tire casing 20 of a particular size tire. These term modifications are used again to facilitate the operator's ability to quickly prompt the screen.

The subsequent discussion is the sequence a tire builder would take following the procedures outlined in the software illustrated in the Figures 15, 16, 17 and 18.

When building the first tire, the operator powers up the machine and the machine will prompt the operator to press "home". The operator presses the "home" button and the machine will move all axis and display "Homing" on the screen. When the homing routine is complete, the machine will prompt "select tire size". The operator then presses the "change tire size" button to change to the tire size screen. He then presses the appropriate tire size selection button for the tire he is about to build. He then presses the "auto" button to return to the main screen. For all subsequent tires he is to build the machine will prompt "build new tire". The operator will then press the okay button on the screen. The machine will display the previous selected tire size and prompt, "build this tire size". If this is the correct tire size, he will press "okay". If it is not the correct tire size, he will press "change tire size" button and enter the correct tire size on the screen. The machine will display "moving to tread loading position". The fingers 202 will adjust to the proper tread loading position for the tire size selected, and the hub will retract to its tread loading position. The machine will prompt "load tread". The operator will load the appropriate tread 10 onto the fingers 202. He will then press "okay" when finished. The machine will display "moving to tire loading position", the hub will then extend to the tire loading position. The machine will prompt "loading tire". The operator will load the appropriate tire casing and press "okay" when finished.

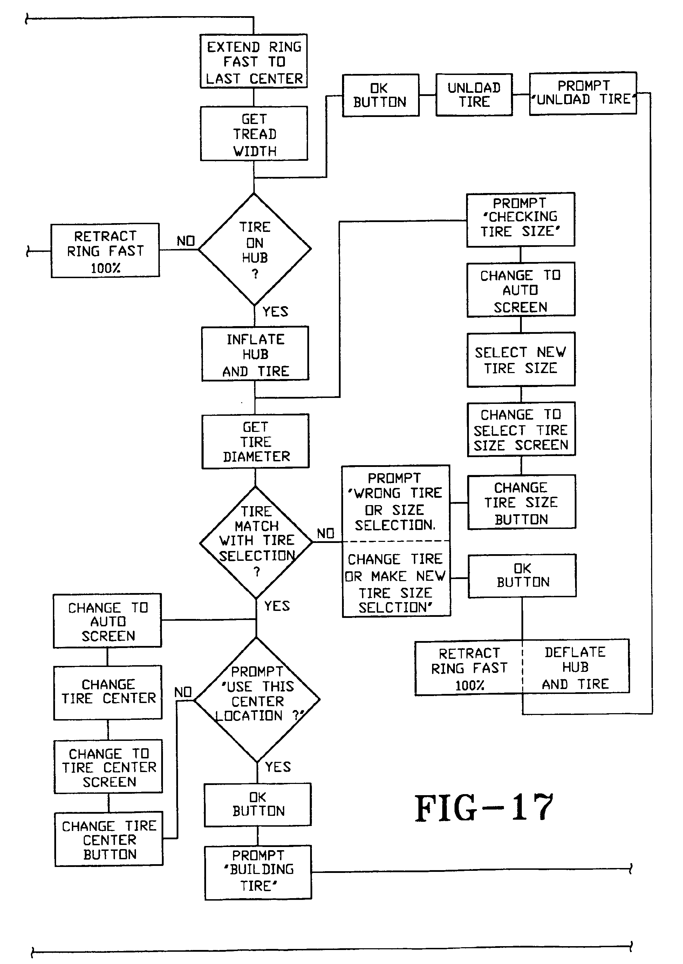

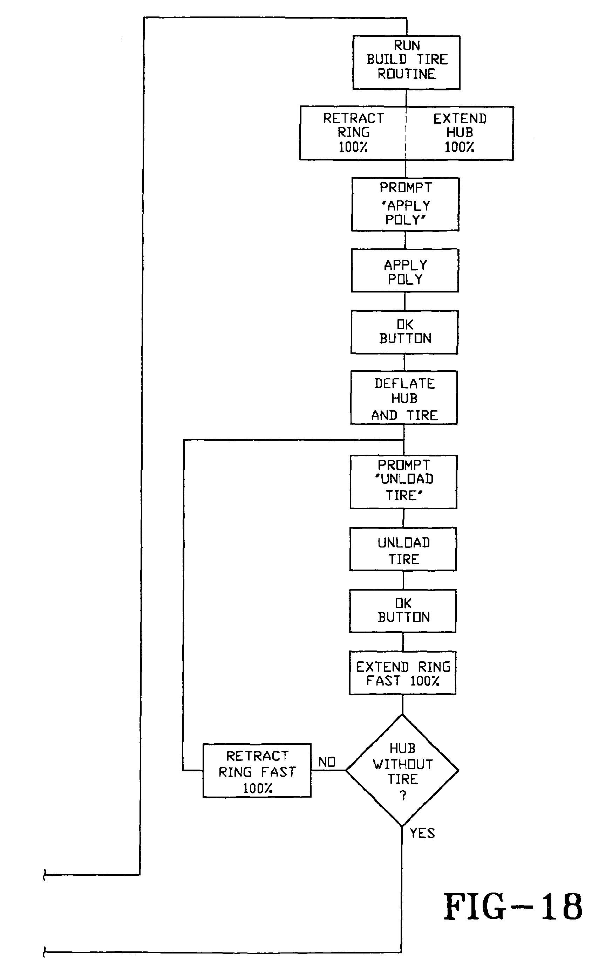

The machine will display "checking tire". The ring, which we referred to earlier as the clamping mechanism 500 will extend and check to see that both a tread 10 and tire casing 20 are present. If both are present, the ring will retract and the expanded hub and tire will inflate. The way in which the ring or clamping mechanism 500 checks to see that the tread and casing are present provides the novel feature of having a sensor mechanism 700 that picks up the first tread edge 14 and a second tread edge 16 as the tread has been passed over by the clamping mechanism. It is preferable that the sensor 700 be a laser beam. Also attached to the clamping mechanism is a device 800 that emits a sonic signal to verify that a tire casing is actually on the mount wheel when the clamping ring passes over. If both the casing and the tire are present, the ring will retract and the expandable hub and tire will inflate. The machine will prompt "remove polyfilm". If now polyfilm is present the operator presses okay. Polyfilm is used to protect the inner side of the tread casing from contaminates and keeps the tread fresh. This polyfilm must be removed prior to tread assembly. If polyfilm is present, the operator removes the film using the foot pedal to rotate the hub as required. When he is finished, he prompts okay. At this point the ring will extend to the point when a line laser is positioned on the theoretical center of the tire. The machine will prompt "use this center location?". If this centerline is acceptable, the operator presses "okay". If the centerline needs to be adjusted, the operator will press the "change tire center" button. At this point in time, the machine jogs the ring and the line laser to the desired center location by pressing in or out buttons on the tire center screen. When the operator is satisfied with the centerline, he presses the enter button. He then presses okay on the main tire screen. The machine will display "tire building". The machine will complete the tire building cycle automatically unless interrupted by the stop button. When the tire is complete, the machine will prompt apply polyfilm. The operator will apply polyfilm and width to the tire using the hub foot pedal to rotate the hub as required. When finished he will press "okay". The machine will prompt "unload tire", at this point, the operator unloads the tire from the hub, presses "okay" when complete. The machine will then prompt "build a new tire" and display the last tire size loaded. The operator will press okay and the building sequence will start again. As discussed above and as shown on Figure 17, if the operator chooses not to use the center location selected by the apparatus, he can hit change to auto screen, change tire center, change to tire center screen, and change tire center button. This way he can actually select the optimal center for the particular tire casing 20. In most cases the actual machine center and casing center will be the optimal position. Only in rare occasions will the operator opt to mismatch centerlines in order to more perfectly match a tread 10 to a casing 20. Once the centerline is established, the operator runs "build tire" routine at which point he retracts the ring, extends the hub, prompts "applies poly", he applies poly and prompts "okay" on the screen. He then deflates the hub, prompts to "unload tire", unloads the tire, prompts "okay", extends the ring and retracts the ring, as disclosed on Figure 18 of the chart.

As can easily be appreciated, the apparatus 100 takes much of the guesswork out of tire and tread application procedures when retreading commercial truck tires or any truck tire or any tire for that matter. What is of great benefit is that the operator is positioned at one location with a screen and in full view of the mechanism so that everything from the monitor display to all the actual tread application mechanisms can be easily observed by the operator without requiring the operator to be moved or to move from the front of the location of the apparatus.

In Figure 20, what is readily appreciated is that the stop block mechanism 210 is shown contacting the edge 14 of the tread 10. This is important because the centering mechanisms rely on the fact that the tread 10 is mounted on the tread expander 200 and the stop block pushes the tread 10 back to a known center position. The center position is calculated by measuring the tread edges by sensing them using the sensor 700. Once the tread width TW is known, the software automatically calculates where the center is. Once the tread 10 pushes into contact against the stop block 210, then the stop blocks 210 move a predetermined distance to a centerline location. This creates the optimal centering of the tread 10 to the casing 20. No other prior art apparatus has been built that automatically calculated the actual center of the tread 10 and then automatically positions the tread 10 to that location relative to the apparatus. This eliminates almost all-human error from entering into a tire assembly.

## Claims

1. A method for centering an annular tread (10) on a pneumatic tire casing (20), the method comprising the steps of mounting the tread (10) on a tread expander assembly (200); establishing a first plane coincident with the desired center of the casing or wheel (300); positioning the tread (10) on the tread expander assembly (200) and establishing the circumferential centerline of the tread to be coincident with a second plane axially spaced a relative distance from and parallel to the first plane of the casing or wheel; expanding the tread as required to permit the tread to encircle the casing; and providing relative axial movement between said tread expander (200) and a casing mounted on said wheel to bring the second plane and the first plane into coincidence, the method being **characterized by** establishing the second plane by sensing a first edge and a second edge of the tread when the tread is positioned on the tread expander (200); communicating the sensor data to a computer which calculates the distance between the first and second tread edges to establish the tread centerline, the location of the second plane, and the relative distance between the first and second plane; and then directing the relative movement of the tread and casing to align the first and second planes.

2. The method of claim 1, wherein the step of positioning the tread (10) includes the step of moving the tread into contact against one or more axially movable mechanical stops (210), each mechanical stop having a tread contacting surface equally spaced from the first plane, to move against the tread for a fixed distance, thereby aligning the tread edges parallel to the first plane.

3. The method of claim 2, wherein when the centerline of the tread (10) is calculated and the mechanical stops (210) are moved to align the tread, the second plane's relative distance from the first plane is established.

4. The method of any of the previous claims, wherein when the centerline of the tread (10) is calculated, the location of the second plane is known prior to the centerline of the tread being established.

## Patentansprüche

1. Verfahren zum Zentrieren einer kreisringförmigen Lauffläche (10) auf einem Luftreifenunterbau (20), wobei das Verfahren die Schritte umfasst, dass die Lauffläche (10) auf einer Laufflächenexpandieranordnung (200) angebracht wird; eine erste Ebene, die mit dem gewünschten Zentrum des Unterbaus oder Rades (300) übereinstimmt, festgelegt wird; die Lauffläche (10) auf der Laufflächenexpandieranordnung (200) positioniert wird und eine Umfangsmittellinie der Lauffläche derart festgelegt wird, dass sie mit einer zweiten Ebene übereinstimmt, die axial einen relativen Abstand von der ersten Ebene des Unterbaus oder Rades beabstandet ist und parallel zu dieser liegt; die Lauffläche wie erforderlich expandiert wird, damit die Lauffläche den Unterbau umschließen kann; und eine relative axiale Bewegung zwischen der Laufflächenexpandiervorrichtung (200) und einem an dem Rad angebrachten Unterbau vorgesehen wird, um die zweite Ebene und die erste Ebene in Übereinstimmung zu bringen, wobei das Verfahren **dadurch gekennzeichnet ist, dass** die zweite Ebene festgelegt wird, indem eine erste Kante und eine zweite Kante der Lauffläche erfasst werden, wenn die Lauffläche auf der Laufflächenexpandiervorrichtung (200) angeordnet ist; die Sensordaten an einen Computer übermittelt werden, der den Abstand zwischen der ersten und zweiten Laufflächenkante berechnet, um die Laufflächenmittellinie, die Lage der zweiten Ebene und den relativen Abstand zwischen der ersten und zweiten Ebene festzulegen; und dann die Relativbewegung der Lauffläche und des Unterbaus derart gelenkt werden, dass die erste und zweite Ebene ausgerichtet werden.

2. Verfahren nach Anspruch 1, wobei der Schritt des Positionierens der Lauffläche (10) den Schritt umfasst, dass die Lauffläche in Kontakt gegen eine oder mehrere axial bewegliche mechanische Anschläge (210) bewegt wird, wobei jeder mechanische Anschlag eine Laufflächenkontaktfläche aufweist, die gleich von der ersten Ebene beabstandet ist, um sich über einen festen Abstand gegen die Lauffläche zu bewegen, wodurch die Laufflächenkanten parallel zu der ersten Ebene ausgerichtet werden.

3. Verfahren nach Anspruch 2, wobei, wenn die Mittellinie der Lauffläche (10) berechnet wird und die mechanischen Anschläge (210) bewegt werden, um die Lauffläche auszurichten, der relative Abstand der zweiten Ebene von der ersten Ebene festgelegt wird.

4. Verfahren nach einem der vorhergehenden Ansprüche, wobei, wenn die Mittellinie der Lauffläche (10) berechnet wird, die Lage der zweiten Ebene bekannt ist, bevor die Mittellinie der Lauffläche festgelegt wird.

## Revendications

1. Procédé pour centrer une bande de roulement annulaire sur une carcasse de bandage pneumatique (20), le procédé comprenant les étapes consistant à : monter la bande de roulement (10) sur un assemblage d'élargissement de bande de roulement (200) ; établir un premier plan qui coïncide avec le centre désiré de la carcasse ou de la roue (300) ; positionner la bande de roulement (10) sur l'assemblage d'élargissement de bande de roulement (200) et établir la médiane circonférentielle de la bande de roulement pour la faire coïncider avec un deuxième plan espacé en direction axiale sur une distance relative du premier plan de la carcasse ou de la roue et parallèle audit plan ; élargir la bande de roulement en fonction des nécessités pour permettre à la bande de roulement d'encercler la carcasse ; et procurer un mouvement axial relatif entre ledit dispositif d'élargissement de bande de roulement (200) et une carcasse montée sur ladite roue pour obtenir une coïncidence entre le deuxième plan et le premier plan, le procédé étant **caractérisé par** le fait de : établir le deuxième plan en détectant un premier bord et un deuxième bord de la bande de roulement lorsque la bande de roulement est positionnée sur le dispositif d'élargissement de bande de roulement (200) ; envoyer les données détectées à un ordinateur qui calcule la distance s'étendant entre le premier et le deuxième bord de la bande de roulement afin d'établir la médiane de la bande de roulement, le positionnement du deuxième plan et la distance relative entre le premier et le deuxième plan ; et ensuite orienter le mouvement relatif de la bande de roulement et de la carcasse dans le but de placer le premier et le deuxième plan en alignement respectif.

2. Procédé selon la revendication 1, dans lequel l'étape consistant à positionner la bande de roulement (10) englobe l'étape consistant à déplacer la bande de roulement pour la mettre en contact avec un ou plusieurs arrêts mécaniques (210) mobiles en direction axiale, chaque arrêt mécanique possédant une surface de mise en contact avec la bande de roulement, disposés en position équidistante par rapport au premier plan, pour se déplacer contre la bande de roulement sur une distance fixe, afin d'aligner ainsi les bords de la bande de roulement parallèlement au premier plan.

3. Procédé selon la revendication 2, dans lequel lorsque la ligne médiane de la bande de roulement (10) est calculée et lorsque les arrêts mécaniques (210) sont déplacés à des fins de mise en alignement avec la bande de roulement, la distance relative du deuxième plan par rapport au premier plan est établie.

4. Procédé selon l'une quelconque des revendications précédentes, dans lequel, lorsque la ligne médiane de la bande de roulement (10) est calculée, l'emplacement du deuxième plan est connu avant d'établir la ligne médiane de la bande de roulement.
